## (19) Europäisches Patentamt
## European Patent Office
## Office européen des brevets

(11) **EP 1 083 648 A2**

(12) **EUROPÄISCHE PATENTANMELDUNG**

(43) Veröffentlichungstag:
**14.03.2001 Patentblatt 2001/11**

(51) Int. Cl.$^7$: **H02M 3/156**, H02M 1/12

(21) Anmeldenummer: **00203003.9**

(22) Anmeldetag: **29.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.09.1999 DE 19942794**

(71) Anmelder:
• **Philips Corporate Intellectual Property GmbH**
**52064 Aachen (DE)**
Benannte Vertragsstaaten:
**DE**

• **Koninklijke Philips Electronics N.V.**
**5621 BA  Eindhoven (NL)**
Benannte Vertragsstaaten:
**FR GB**

(72) Erfinder:
**Lürkens, Peter,**
**Philips Corporate Intel. Prop.GmbH**
**52064 Aachen (DE)**

(74) Vertreter:
**Volmer, Georg, Dipl.-Ing. et al**
**Philips Corporate Intellectual Property GmbH,**
**Habsburgerallee 11**
**52064 Aachen (DE)**

(54) **Konverter mit Hochsetzstelleranordnung**

(57)     Die Erfindung bezieht sich auf einen Konverter mit einer Hochsetzstelleranordnung (5). Um eine möglichst optimale Anpassung an die international unterschiedlichen Netzspannungen zu erreichen, wird vorgeschlagen, dass bei einer in einem ersten Spannungsbereich liegenden Konvertereingangsspannung ($U_{net}$) ein erster Hochsetzstellerschaltfrequenzbereich und dass bei einer in einem zweiten Spannungsbereich liegenden Konvertereingangsspannung ($U_{net}$) ein zweiter Hochsetzstellerschaltfrequenzbereich vorgesehen ist, wobei der erste Spannungsbereich kleinere Spannungswerte umfaßt als der zweite Spannungsbereich und wobei der erste Hochsetzstellerschaltfrequenzbereich größere Frequenzwerte umfaßt als der zweite Hochsetzstellerschaltfrequenzbereich.

FIG. 1

**Beschreibung**

Die Erfindung betrifft einen Konverter mit einer Hochsetzstelleranordnung.

Der erfindungsgemäße Konverter kommt vorzugsweise als Schaltnetzteil in Geräten der Unterhaltungselektronik zur Anwendung.

Aus der US 4,683,529 ist beispielsweise ein Schaltnetzteil mit einer Hochsetzstelleranordnung ("flyback circuit") und mit einer Kontrollschaltung zur Leistungsfaktorkorrektur bekannt. Das Schaltnetzteil setzt eine Netzspannung in eine geregelte Ausgangsgleichspannung um und ist zum Betrieb bei unterschiedlichen Netzspannungen und Netzspannungsfrequenzen, die international variieren, vorgesehen. Die Kontrollschaltung steuert den Schalttransistor der Hochsetzstelleranordnung durch ein pulsweitenmoduliertes Steuersignal geeigneter Frequenz so, dass die Hochsetzstelleranordnung an der Grenze zwischen kontinuierlichem und diskontinuierlichem Betrieb arbeitet, um die Schaltverluste zu minimieren. Weiterhin soll das Schaltnetzteil einen hohen Leistungsfaktor unter verschiedenen Netz- und Lastbedingungen gewährleisten.

Der Erfindung liegt die Aufgabe zugrunde, einen Konverter mit einer Hochsetzstelleranordnung so auszugestalten, dass eine möglichst optimale Anpassung an die international unterschiedlichen Netzspannungen erreicht wird.

Die Aufgabe wird dadurch gelöst, dass bei einer in einem ersten Spannungsbereich liegenden Konvertereingangsspannung ein erster Hochsetzstellerschaltfrequenzbereich vorgesehen ist und dass bei einer in einem zweiten Spannungsbereich liegenden Konvertereingangsspannung ein zweiter Hochsetzstellerschaltfrequenzbereich vorgesehen ist, wobei der erste Spannungsbereich kleinere Spannungswerte umfaßt als der zweite Spannungsbereich und wobei der erste Hochsetzstellerschaltfrequenzbereich größere Frequenzwerte umfaßt als der zweite Hochsetzstellerschaltfrequenzbereich.

Auf diese Weise können die international unterschiedlichen EMI-Anforderungen (Electro-Magnetic Interference) in Europa und den USA für Geräte der Unterhaltungselektronik durch entsprechend angepaßte Wahl der Hochsetzstellerschaltfrequenzbereiche erfüllt werden. Dieser Ansatz führt zu Schaltnetzteilen mit kleinen Abmessungen und geringem Gewicht.

Die Erfindungsidee wird insbesondere dadurch realisiert, dass im zweiten Spannungsbereich ein lückender Konverterbetrieb vorgesehen ist und dass näherungsweise die gleiche Obergrenze für den Strom durch die Hochsetzstellerinduktivität sowohl beim Betrieb im ersten als auch beim Betrieb im zweiten Spannungsbereich vorgesehen ist. Insbesondere ist im ersten Spannungsbereich und Unter Vollast ein Betrieb des Konverters im Grenzbereich zwischen lückendem und nichtlückendem Betrieb vorgesehen, wobei im ersten Spannungsbereich und unter Teillast ein lückender Betrieb des Konverters vorgesehen ist und wobei im zweiten Spannungsbereich sowohl unter Vollast als auch unter Teillast ein lückender Betrieb des Konverters vorgesehen ist.

In einer anderen Ausgestaltung des erfindungsgemäßen Konverters ist vorgesehen, dass ein erster Kondensator zur Lieferung der Versorgungsspannung eines integrierten Schaltkreises, der zur Lieferung des Steuersignals für das Hochsetzstellerschaltelement dient, und dass der erste Kondensator mit dem Punkt zwischen Hochsetzstellerinduktivität, Hochsetzstellerschaltelement und Hochsetzstellerdiode über einen zweiten Kondensator und eine weitere Diode, über die der erste Kondensator nach Art einer Ladungspumpe aufgeladen wird, gekoppelt ist. Diese Maßnahme gewährleistet durch einfache Schaltungsmodifikationen die Spannungsversorgung des genannten integrierten Schaltkreises.

Eine andere Schaltungvariante beinhaltet, dass ein mit dem Punkt zwischen der Hochsetzstellerinduktivität, dem Hochsetzstellerschaltelement und der Hochsetzstellerdiode verbundener Schaltungsblock ein Signal für die Erkennung des Nullzustandes des Stroms durch die Hochsetzstellerdiode und/oder des Zustandes der minimalen Spannung am Schalter liefert. Das so gelieferte Signal kann zur Ermittlung des optimalen Zeitpunktes für das Einschalten des Hochsetzstellerschaltelements verwendet werden, so dass die Schaltverluste minimiert werden.

Der Übergang vom ersten in den zweiten Betriebsbereich erfolgt vorzugsweise kontinuierlich.

Ausführungsbeispiele der Erfindung werden nachfolgend anhand der Zeichnungen näher beschrieben. Es zeigen:

| Fig. 1 | einen erfindungsgemäßen Konverters |
|---|---|
| Fig. 2 | eine Kontrolleinheit für den erfindungsgemäßen Konverter, |
| Fig. 3 bis 5 | Zeitverläufe eines Stromes durch die Hochsetzstellerspule des Konverters und einer Spannung $V_T$ und Fig. 6 ein den Zusammenhang zwischen der minimalen Ausschaltzeit und der Konvertereingangsspannung zeigendes Diagramm. |

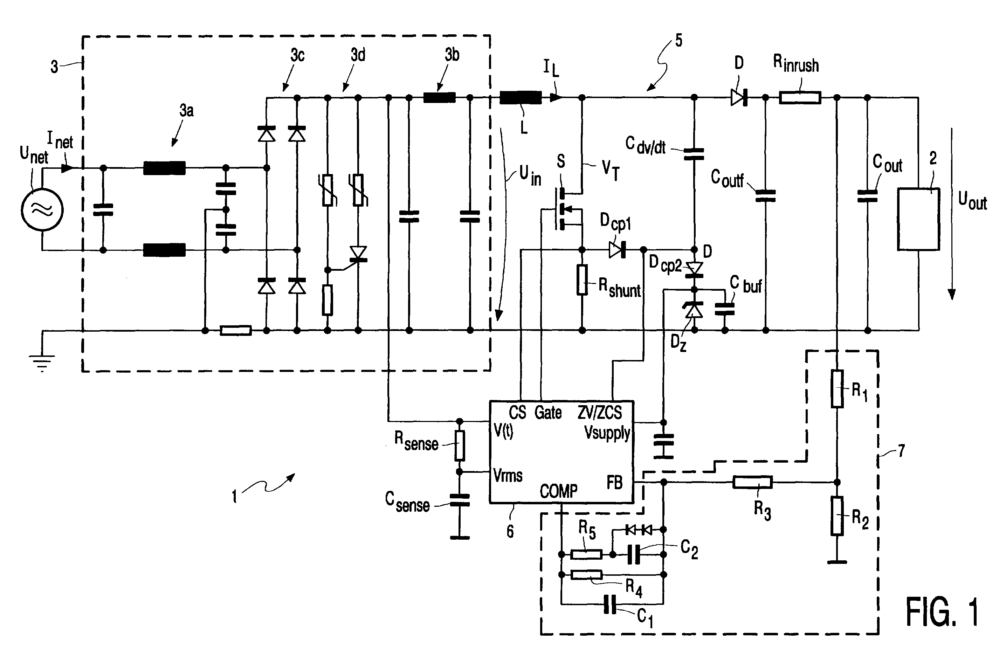

Bei dem in Fig. 1 gezeigten (AC-DC-) Konverter 1 wird eine Netzspannung $U_{net}$ in eine Ausgangsspannung $U_{out}$ umgesetzt, die zur Versorgung einer Last 2 dient. Die Netzspannung $U_{net}$ wird zunächst einem als Eingangsstufe dienenden Schaltungsblock 3 zugeführt, der Filterschaltungen 3a und 3b, eine Gleichrichteranordnung 3c und eine Spannungsbegrenzungsschaltung 3d aufweist. Am Ausgang der Eingangsstufe 3 fällt während des Betriebs des Konverters 1 eine gleichgerichtete Spannung $U_{in}$ ab, die sich in guter Näherung als eine Abfolge von positiven Sinushalbwellen beschreiben läßt. Die Spannung $U_{in}$ wird einem

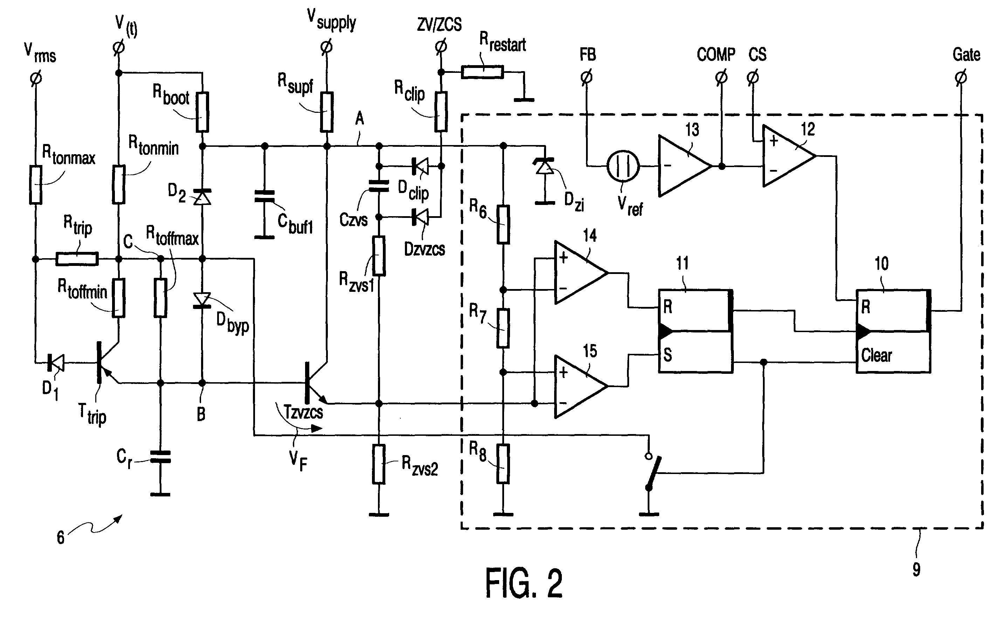

Hochsetzsteller 5 zugeführt wird, der in üblicher Weise aus einer Induktivität L, einem (hier als MOSFET-Transistor ausgeführten) Schalter/Schaltelement S und einer Diode D besteht. Der Strom durch die Induktivität L ist mit $I_L$ bezeichnet. Der Steuereingang des Schalters S, d.h. die Gate-Elektrode des als Schalter verwendeten MOSFET-Transistors, ist mit einem entsprechenden mit Gate bezeichneten Ausgang einer Kontrolleinheit 6 verbunden. Die Wirkungsweise der Kontrolleinheit 6 wird später anhand von Fig. 2 näher erläutert.

Parallel zum Ausgang des Hochsetzstellers 5 liegt ein Kondensator $C_{outf}$, bei dem ein Anschluß über einen Widerstand $R_{inrush}$ mit einem Anschluß eines Ausgangskondensators $C_{out}$ gekoppelt ist. Der Widerstand $R_{inrush}$ dient zur Begrenzung des vom Konverter aus dem die Spannung $U_{net}$ liefernden Nerz gezogenen Stromes. Dies ist mit weniger Verlusten verbunden als bei der üblichen Strombegrenzung durch einen eingangsseitig des Konverters 1 angeordneten NTC-Widerstand. Die beiden anderen Anschlüsse der Kondensatoren $C_{outf}$ und $C_{out}$ liegen beide auf Nullpotential (Erdpotential). Am Kondensator $C_{out}$ wird die Ausgangsspannung $U_{out}$ abgegriffen. Der Kondensator $C_{outf}$ dient zur Reduktion des Rippels der Ausgangsgleichspannung $U_{out}$ und zur Ableitung der hochfrequenten Anteile des Ausgangsstromes des Hochsetzstellers und damit zur weiteren Verringerung der Verluste im Widerstand $R_{inrush}$.

Eine zwischen der Spannungsbegrenzungsschaltung 3d und der Filterschaltung 3b anliegende Spannung V(t) (die gefiltert durch die Filterschaltung 3b die Spannung $U_{in}$ ergibt) wird einem entsprechenden Eingang der Kontrolleinheit 6 zugeführt. Für den Fall des Fehlens der im Rahmen der Erfindung nicht zwingend erforderlichen Filterschaltung 3b würde die Spannung $U_{in}$ an den Eingang V(t) der Kontrolleinheit 6 gelegt werden. Die Spannung V(t) liegt weiterhin an einer Reihenschaltung aus einem Widerstand $R_{sense}$ und einem Kondensator $C_{sense}$ an, die zur Erzeugung einer Spannung $V_{rms}$ aus der Spannung V(t) dient. Diese Spannung entspricht dem Mittelwert der gleichgerichteten Netzspannung und stellt außerdem ein guter Näherung ein Maß für den Effektivwert der Eingangsspannung dar. Der diesem Effektivwert entsprechende Spannungswert $V_{rms}$ wird am Kondensator $C_{sense}$ abgegriffen und dem mit $V_{rms}$ bezeichneten Eingang der Kontrolleinheit 6 zugeführt.

Ein Widerstand $R_{shunt}$ dient zur Messung des Stroms durch den Schalter S. Eine an diesem Widerstand $R_{shunt}$ abfallende Spannung wird als eine dem Strom durch den Schalter S entsprechende Meßgröße einem Eingang CS der Kontrolleinheit 6 zugeführt.

Ein Eingang ZV/ZCS der Kontrolleinheit 6 dient zum Empfang eines Signals, mit dessen Hilfe ein ZVS-Betrieb (Zero Voltage Switching, Einschalten des Schalters S bei Null Volt oder wenigstens kleinstmöglicher Spannung) bzw. ZCS-Betrieb (Zero Current Switching, Einschalten des Schalters S bei einem Strom in der Diode D von Null) erreicht wird. Der Anschluß ZV/ZCS ist sowohl mit dem dem Punkt zwischen der Induktivität L und der Diode D gegenüberliegenden Anschluß des Kondensators $C_{dv/dt}$ verbunden, als auch mit der Kathode einer Diode $D_{cp1}$, wobei die Anode der Diode $D_{cp1}$ mit dem am Anschluß CS liegenden Punkt zwischen dem Schalter S und dem Widerstand $R_{shunt}$ verbunden ist.

Die Kathode der Diode $D_{cp1}$ ist weiterhin mit der Anode einer Diode $D_{cp2}$ verbunden, deren Kathode mit der Kathode einer Zenerdiode $D_z$ verbunden ist, deren Anode wiederum auf Nullpotential liegt. Parallel zur Zenerdiode $D_z$ liegt weiterhin ein Kondensator $C_{buf}$. Die Spannung $V_{supply}$ wird als Versorgungsspannung für die Kontrolleinheit 6 verwendet und einem entsprechend bezeichneten Eingang der Kontrolleinheit 6 zugeführt.

Zwei Anschlüsse FB und COMP der Kontrolleinheit 6 mit einem die Ausgangsspannung $U_{out}$ auswertenden Schaltungsblock 7 (siehe Fig. 1) gekoppelt. Dieser enthält zwei als Spannungsteiler geschaltete Widerstände $R_1$ und $R_2$, an denen die Ausgangsspannung $U_{out}$ anliegt. Der Punkt zwischen den Widerständen $R_1$ und $R_2$ ist über den Widerstand $R_3$ mit dem Anschluß FB (FeedBack-Eingang) der Kontrolleinheit 6 verbunden. Der Anschluß FB ist weiterhin über eine aus drei Zweigen bestehende Parallelschaltung mit dem Anschluß COMP gekoppelt, wobei einer der parallelen Zweige einen Kondensator $C_1$, ein anderer Zweig einen Widerstand $R_4$ und der dritte Zweig eine Reihenschaltung aus einem Widerstand $R_5$ und einem Kondensator $C_2$ enthält. Parallel zum Kondensator $C_2$ liegen außerdem zwei nicht näher bezeichnete Dioden mit Flußrichtung in Richtung des Anschlusses COMP. Der Schaltungsblock 7 bestimmt das Regelverhalten der Kontrolleinheit 6. Insbesondere sind die durch den Schaltungsblock 7 zusammengefaßten Bauelemente so dimensioniert, dass die Kontrolleinheit 6 das Verhalten eines PI-Reglers mit begrenzter Gleichspannungverstärkung zeigt.

Fig. 2 zeigt den Aufbau der Kontrolleinheit 6, von der durch einen Block 9 zusammengefasste Schaltungsteile mit Hilfe eines im Handel erhältlichen Controller-IC (UCC3807) realisiert werden. Ein Flipflop 10 liefert das an einen mit Gate bezeichneten Anschluß angelegtes und dem Steuereingang des Schalters S zugeführtes Steuersignal. Das Flipflop 10 wird von einem weiteren Flipflop 11 getriggert. Der RESET-Eingang des Flipflops 10 ist mit dem Ausgang eines Komparators 12 verbunden, dessen einer Eingang (+) mit einem Anschluß CS und dessen anderer Eingang (-) mit dem Ausgang eines Fehlerverstärkers 13 und dem Anschluß COMP verbunden ist. Dem Eingang des Verstärkers 13 wird eine am Anschluß FB anliegende und durch eine Referenzspannung $V_{ref}$ überlagerte Spannung zugeführt. Sobald der am Anschluß CS anliegende Spannungswert, der - wie oben erwähnt - äquivalent zum Strom durch den Schalter S ist, den am Anschluß COMP bzw. am Ausgang des Verstärkers 13 anliegenden Spannungswert übersteigt, wird das Flipflop 10 zurückgesetzt und über den Anschluß Gate dem Schalter S ein entsprechendes Ausschaltsignal zugeführt.

An den Eingängen des Flipflops 11 liegen die Ausgänge zweier Komparatoren 14 und 15, d.h. am Rücksetz-Eingang der Ausgang des Komparators 14, am Setz-Eingang der Ausgang des Komparators 15. Der positive Eingang des Komparators 14 ist mit dem negativen Eingang des Komparators 15 verbunden. Die beiden anderen Komparatoreingänge sind mit einer Reihenschaltung aus drei Widerständen $R_6$, $R_7$ und $R_8$ gekoppelt, die auf einer Seite über einen Anschluß des Widerstandes $R_8$ auf Massepotential liegt und auf der anderen Seite über einen Anschluß des Widerstandes $R_6$ mit einem Anschluß eines Widerstandes $R_{supf}$ verbunden ist, dessen anderer Anschluß mit dem Versorgungsspannungsanschluß $V_{supply}$ der Kontrolleinheit 6 verbunden ist. Der Punkt zwischen $R_6$ und $R_{supf}$ ist mit A bezeichnet. Eine Zenerdiode $D_{zi}$ verbindet den Punkt A mit dem Massepotential. Zwischen den beiden Widerständen $R_6$ und $R_8$ liegt der Widerstand $R_7$. Der Punkt zwischen den Widerständen $R_6$ und $R_7$ ist mit dem negativen Eingang des Komparators 14 verbunden. Der Punkt zwischen den Widerständen $R_7$ und $R_8$ ist mit dem positiven Eingang des Komparators 15 verbunden.

Der Anschluß ZV/ZCS ist über einen Widerstand $R_{restart}$ mit dem Massepotential gekoppelt. Weiterhin liegt zwischen dem Anschluß ZV/ZCS und dem Punkt A die Reihenschaltung aus einem Widerstand $R_{clip}$ und einer Diode $D_{clip}$ deren Kathode mit dem Punkt A verbunden ist. Die Anode der Diode $D_{clip}$ ist mit der Anode einer Diode $D_{ZVZCS}$ verbunden, deren Kathode mit einem Anschluß eines Widerstandes $R_{ZVS1}$ verbunden ist. Zwischen den Kathoden der Dioden $D_{clip}$ und $D_{ZVZCS}$ liegt ein Kondensator $C_{ZVS}$. Weiterhin liegt zwischen dem anderen Anschluß des Widerstandes $R_{ZVS1}$ und dem Massepotential ein Widerstand $R_{ZVS2}$.

Der Punkt zwischen den beiden Widerständen $R_{ZVS1}$ und $R_{ZVS2}$ ist einerseits mit dem negativen Eingang des Komparators 15 und andererseits mit dem Emitter eines npn-Bipolartransistors $T_{ZVZCS}$ verbunden. Der Kollektor des Transistors $T_{ZVZCS}$ liegt auf dem Potential des Punktes A. Die Basis dieses Transistors (Punkt B) ist mit einem Anschluß eines Kondensators $C_T$ verbunden, dessen anderer Anschluß auf Massepotential liegt. Zwischen einem Punkt C und dem Punkt B liegt in Flußrichtung von Punkt C nach Punkt B eine Diode $D_{byp}$ und parallel zu dieser Diode $D_{byp}$ weiterhin ein Widerstand $R_{toffmax}$. Weiterhin ist der Punkt C mit einem Widerstand $R_{toffmin}$ verbunden, dessen anderer Anschluß mit dem Kollektor eines pnp-Bipolartransistors $T_{trip}$ verbunden ist. Der Emitter der Transistors $T_{trip}$ ist mit dem Punkt B verbunden.

Die Basis des Transistors $T_{trip}$ ist mit der Anode einer Diode $D_1$ verbunden. Die Kathode der Diode $D_1$ ist mit einem Anschluß eines Widerstands $R_{tonmax}$ verbunden, dessen anderer Anschluß mit dem Anschluß $V_{rms}$ verbunden ist. Zwischen der Kathode der Diode $D_1$ und dem Punkt C liegt ein Widerstand $R_{trip}$. Zwischen dem Punkt C und dem Anschluß $V(t)$ liegt ein Widerstand $R_{tonmin}$. Der Anschluß $V(t)$ ist weiterhin mit einem Anschluß eines Widerstandes $R_{boot}$ verbunden, dessen anderer Anschluß einerseits mit der Kathode einer Diode $D_2$ und andererseits mit einem Anschluß eines Kondensators $C_{buf1}$ verbunden ist. Der andere Anschluß des Kondensators $C_{buf1}$ liegt auf Massepotential. Die Anode der Diode $D_2$ ist mit dem Punkt C verbunden.

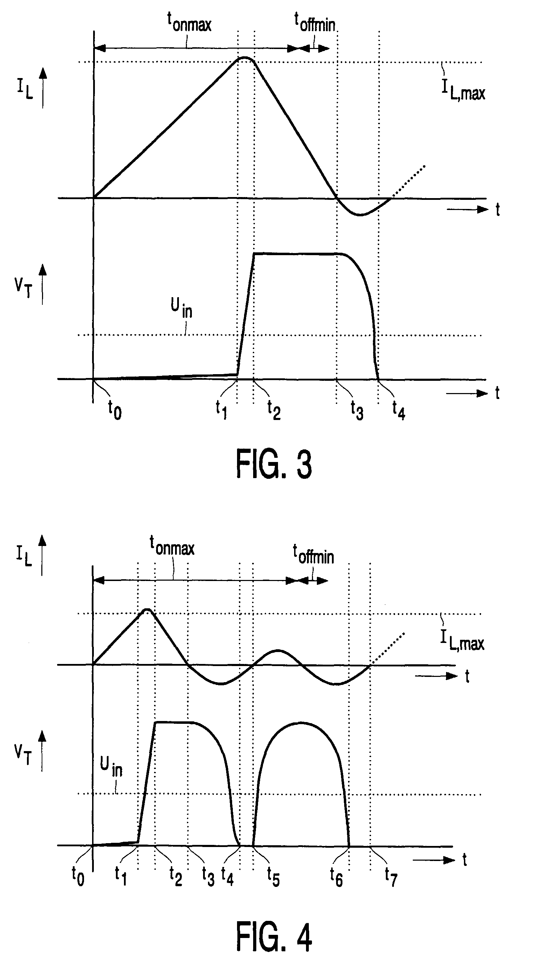

Mit Hilfe der Kontrolleinheit 6 werden die Zeitdauern $t_{onmax}$ und $t_{offmin}$ (siehe die Figuren 3 bis 6) automatisch auf geeignete Werte eingestellt. Die Werte werden festgelegt durch geeignete Wahl des Kondensator $C_T$, des Widerstandes $R_{tonmax}$, des Widerstandes $R_{tonmin}$, des Widerstandes $R_{toffmax}$ und des Widerstandes $R_{toffmin}$. Mittels des Transistors $T_{ZVZCS}$ wird der Kondensator $C_T$ von den das ZVS- und ZCS-Verhalten bewirkenden Schaltungsteilen $D_{ZVZCS}$, $R_{ZVS1}$ und $R_{ZVS2}$ entkoppelt.

Im eingeschalteten Zustand des Schalters S legt das Flipflop 10 an den Anschluß Gate ein Steuersignal mit hohem Signalpegel zum Einschalten des Schalters S. Dabei wird das Flipflop 10 mittels des Flipflops 11 entsprechend getriggert. Am Beginn einer solchen Phase beträgt die Spannung am Kondensator $C_T$ ungefähr ein Drittel der Versorgungsspannung $V_{supply}$ plus der an der Basis-Emitter-Strecke des Transistors $T_{ZVZCS}$ abfallenden Vorwärtsspannung $V_F$. Am Anschluß Gate liegt ein Einschaltsignal an, bis die Spannung am Kondensator $C_T$ den oberen Triggerpegel, d.i. ein Schwellwert der Größe 2/3 $V_{supply}$ + $V_F$, überschreitet. Das Einschaltsignal wird außerdem abgeschaltet, wenn der Strom im Widerstand $R_{shunt}$ und damit die Spannung am Anschluß CS der Kontrolleinheit 6 einen Wert überschreitet, der durch die Spannung am Anschluß COMP der Kontrolleinheit festgelegt wird. Der Anstieg der Spannung am Kondensator $C_T$ wird dabei durch die Größe der Spannungen $V_{rms}$ und $V(t)$ bestimmt. Die zu diesem Ladevorgang gehörige Zeitkonstante wird bestimmt durch $R_{tonmax}$, $R_{trip}$ und $R_{tonmin}$. Während des Ladens des Kondensators $C_T$ werden die Widerstände $R_{toffmin}$ und $R_{toffmax}$ durch die Diode $D_{byp}$ überbrückt und haben dementsprechend keinen Einfluß auf diesen Ladevorgang. Weiterhin hat die Diode $D_{byp}$ die Aufgabe, während des Ladens von $C_T$ zu verhindern, dass der Transistor $T_{trip}$ eine positive Kollektor-Emitter-Spannung erfährt und dass der Punkt C über die "anti-latch-up"-Diode $D_2$ auf die Versorgungsspannung fixiert wird. In diesem Fall wäre die Zeitspanne $t_{onmax}$ (vgl. die Erläuterungen zu Fig. 3 bis 5) keine Funktion der Spannungen $V_{rms}$ und $V(t)$ mehr. Der Zusammenhang zwischen $t_{onmax}$, $V(t)$ und $V_{rms}$ läßt sich annähern durch die Formel

$$t_{on\,max} \cong \frac{k_1}{k_2 V(t) + V_{rms}}$$

mit $k_1$ und $k_2$ als Konstanten. Die Zeitspanne $t_{onmax}$ gerechnet jeweils ab einem Schaltzyklusbeginn (an dem der Schalter S eingeschaltet wird) ist die Zeit, die der Schalters S längstens eingeschaltet sein kann. Ein Ausschalten des Schalters S erfolgt auch schon dann, wenn der Strom durch den Schalter S einen bestimmten Grenzwert übersteigt, d.h. wenn die am Widerstand $R_{shunt}$ abfallende und am Eingang CS der Kontrolleinheit 6 anliegende Spannung größer wird als die am Eingang COMP der Kontrolleinheit 6 anliegende Spannung. Auf diese Weise wird die übertragene Leistung des Konverters geregelt. Die Abhängigkeit der Zeitspanne $t_{onmax}$ sowohl von der zeitunabhängigen Größe $V_{rms}$ als auch von der zeitabhängigen Größe $V(t)$ gemäß der oben angeführten Funktion begrenzt einerseits die kleinstmögliche Schaltfrequenz des Schalters S und bewirkt andererseits einen mehr trapezförmigen Verlauf des Strom $I_{net}$, was zu einem geringeren Anteil an niederfrequenten Harmonischen im vom Konverter eingangsseitig gezogenen Strom führt.

Nach Überschreiten des genannten oberen Triggerpegels wird der Kondensator $C_T$ über die Widerstände $R_{toffmin}$ und $R_{toffmax}$ und einen nicht näher bezeichneten Schalter der Kontrolleinheit 6 entladen. Während des Entladevorgangs fällt die Spannung am Kondensator $C_T$ von $2/3V_{DD}+V_F$ auf $1/3V_{DD}+V_F$ ab. Solange die Spannung am Kondensator $C_T$ um mehr als $2xV_F$ über dem Wert an der Anode von $D_1$ liegt (Trip-Level), leitet der Transistor $T_{trip}$, so dass die Parallelschaltung aus den Widerständen $R_{toffmin}$ und $R_{toffmax}$ bezüglich des Entladens von $C_T$ wirksam ist. Beim Betrieb des Konverters im Spannungsbereich der 220-V-Netze liegt die Spannung an der Anode von $D_1$ während des Entladens von $C_T$ oberhalb von $2/3V_{supply}+2xV_F$. Das heißt, dass der Transistor $T_{trip}$ niemals leitet und die Entladezeit von $C_T$ nur von $R_{toffmax}$ bestimmt wird.

Bei Netzeingangsspannungen im Bereich der 110-V-Netze liegt die Spannung an der Anode unterhalb $1/3V_{supply}+2xV_F$. In diesem Fall leitet $T_{trip}$ während der ganzen Entladephase, die zwischen $1/3V_{supply}+V_F$ und $2/3V_{supply}+V_F$ erfolgt.

Die höchstmögliche Schaltfrequenz, mit der der Schalter S betrieben wird, ist einerseits abhängig von der Zeitspanne $t_{onmax}$ als auch von der Zeitspanne $t_{offmin}$. Erstere ist von der zeitabhängigen Spannung $V(t)$ und damit vom Momentanwert der Konvertereingangsspannung $U_{net}$ abhängig. $t_{offmin}$ ist nicht zeithängig und hängt nur von der Spannung $V_{rms}$ und damit von der Spannungsamplitude bzw. dem Effektivwert der Eingangsspannung $U_{net}$ (aber nicht von deren Momentanwert) ab. Dementsprechend ist der Bereich, in dem die Schaltfrequenz des Schalters S liegt, bei einer vorgegebenen Konvertereingangsspannung $U_{net}$ lediglich

von $V_{rms}$ abhängig. Den Zusammenhang zwischen $U_{net}$ und $t_{offmin}$ zeigt Fig. 7, aus der ersichtlich ist, dass $t_{offmin}$ in einem ersten Bereich kleinerer Konvertereingangsspannungen $U_{net}$ mit Spannungsamplituden um 110 Volt (im vorliegenden Beispiel mit einer Bereichsobergrenze von 130 Volt) auf einen kleinen Wert von $t_{offmin}$ (hier 0,6 μs) eingestellt wird, so dass der Konverter in einem ersten Schaltfrequenzbereich mit entsprechend hohen Frquenzen arbeitet. Dagegen wird $t_{offmin}$ in einem Zweiten Bereich größerer Konvertereingangsspannungen $U_{net}$ mit Spannungsamplituden um 230 Volt (im vorliegenden Beispiel mit einer Bereichsuntergrenze von 200 Volt) auf einen großen Wert von $t_{offmin}$ (hier 6,5 μs) eingestellt, so dass der Konverter in einem zweiten Schaltfrequenzbereich mit niedrigen Schaltfrequenzen arbeitet.

Die minimale Schaltfrequenz wird bei bei $V(t)=0$ und damit maximalem Wert von $t_{onmax}$ erreicht, der proportional $1/V_{rms}$ ist. Die maximale Schaltfrequenz ergibt sich bei maximalem Wert von $V(t)$ und damit minimalem Wert von $t_{onmax}$. Damit ergibt sich bei dem erfindungsgemäßen Konverter, dass der Schaltfrequenzbereich (d.h. obere und untere Schaltfrequenzgrenze) mit steigendem Wert von $V_{rms}$ zu niedrigeren Frequenzen und bei fallendem Wert von $V_{rms}$ zu höheren Frequenzen verschoben wird. Mit dem erfindungsgemäßen Konverter ist es möglich, eine automatische Anpassung des Schaltfrequenzbereiches so vorzunehmen, dass unterschiedliche EMI-Anforderungen wie insbesondere bei einer Verwendung in Unterhaltungselektronikgeräten in Europa und den USA erfüllt werden. So läßt sich der erfindungsgemäße Konverter so dimensionieren, dass er sich bei einer in Europa üblichen Netzspannung im Bereich von 230 Volt auf Schaltfrequenzen unter 140 kHz (entsprechend den dortigen EMI-Vorschriften) und bei einer in den USA üblichen Netzspannung im Bereich von 110 Volt auf hohe Schaltfrequenzen im Bereich von 300 kHz einstellt (in den USA sind solch hohe Schaltfrequenzen aufgrund anderer EMI-Vorschriften erlaubt). Die erfindungsgemäße Konverterstruktur führt dabei zu geringeren Konverterverlusten. Die Konvertereffizienz wird über einen Weiten Eingangs- bzw. Netzspannungsbereich gesteigert und der Konverter läßt sich mit einem geringeren Gewicht und kleinerer Bauform realisieren.

ZCS, ZVS, "valley switching" und Stromversorgung der Kontrolleinheit 6:

Um einen Betrieb des Konverters 1 mit einem möglichst hohen Wirkungsgrad zu gewährleisten, sollte ein Einschalten des Schalters S erst dann erfolgen, wenn der durch die Diode D fließende Strom zu Null geworden ist. Abweichend von der üblichen Realisierung eines derartigen ZCS-Betriebs, und gegebenenfalls auch eines ZVS-Betriebs, d.h. einem Umschalten des Schalters S bei einer Schalterspannung von (nahezu) Null Volt, wird beim vorliegenden Konverter eine Ladungspumpe eingesetzt, die gleichzeitig zur Stromversorgung des für die Kontrolleinheit 6 verwendeten Controller-ICs (s.u.) und zur Lieferung der Gate-Ladung des Schakltransistors S dient.

Nach dem Ausschalten des Schakltransistors S steigt die Spannung $V_T$ an dessen Drain-Anschluß steil an. Dabei verlagert sich der Laststrom vom Schalttransistor S zum Kondensator $C_{dv/dt}$. Der durch den Kondensator $C_{dv/dt}$ fließende Strom wird durch die Diode $D_{cp2}$ in den Kondensator $C_{buf}$ - entsprechend der Funktion einer Ladungspumpe - geleitet. Eine Überladung des Kondensators $C_{buf}$ wird durch die Zenerdiode $D_Z$ verhindert. Die Spannung des Kondensators $C_{buf}$ dient als Versorgunsspannung $V_{supply}$ für die Kontrolleinheit 6. Im Normalfall ist die Spannung am Kondensator $C_{buf}$ nie wesentlich kleiner als die übliche Versorgungsspannung der Kontrolleinheit 6. Damit hat die Spannung am Punkt D etwa den Wert der Versorgungsspannung zuzüglich dem Spannungsabfall an der Diode $D_{cp1}$.

Mittels eines innerhalb der Kontrolleinheit 6 angeordneten Filters bestehend aus dem Widerstand $R_{supf}$ und dem Kondensator $C_{buf1}$ wird diese Spannung $V_{supply}$ noch zusätzlich gefiltert.

Wenn die Spannung am Kondensator $C_{dv/dt}$ die Ausgangsspannung erreicht hat, wird die Diode D leitend. In diesem Moment verlagert sich der Strom von der Diode $D_{cp2}$, $C_{buf}$ bzw. $D_Z$ auf die Diode D. Die Spannung am Punkt D fällt nun langsam ab, mit der im Vergleich langen Zeitkonstante, die durch $C_{dv/dt}$ und dem Widerstand $R_{restart}$ der Kontrolleinheit 6 (Fig.2) bestimmt wird. Beim normalen Betrieb des Konverters hat dies jedoch noch keinen Einfluß auf die Funktionsweise.Der Strom in der Spule L fällt nun linear ab, da die Ausgangsspannung des Konverters beim bestimungsgemäßen Betrieb stets größer als der Augenblickswert der Eingangsspannung ist.

Die Diode D sperrt, wenn der durch sie fließende Strom zu Null geworden ist. In diesem Moment setzt ein Schwingungsvorgang im Schwingkreis bestehend aus L und $C_{dv/dt}$ ein. Dabei entlädt sich der Kondensator $C_{dv/dt}$ wieder. Der Entladestrom fließt über $R_{shunt}$, $D_{cp1}$, $C_{dv/dt}$ und L. Die Spannung am Punkt D beträgt dann die negative Durchlaßspannung der Diode $D_{cp2}$ zuzüglich dem Spannungsabfall am Widerstand $R_{shunt}$.

Die Spannung an der Verbindung des Kondensators $C_{dv/dt}$ mit der Diode D und der Spule L schwingt dabei um den Wert der Eingangsspannung. Insbesondere dann, wenn die Eingangsspannung kleiner als die Hälfte der Ausgangsspannung ist, schwingt die Spannung am Kondensator $C_{dv/dt}$ herunter bis auf Null. Der Schwingungsvorgang setzt sich fort, bis dass der Schalter S wieder eingeschaltet wird. Die Vorgänge in der Ladungspumpe entsprechen dabei wieder den Vorgängen beim Ausschalten des Schalttransistors S.

Bei der vorliegenden Schaltung steht am Punkt D eine im wesentlichen rechteckförmige Spannung an, deren Wert im wesentlichen gleich der der Kontrolleinheit 6 zugeführten Versorgungsspannung zuzüglich einer Diodendurchlassspannung ist, wenn die Spannung am Schalttransistor S ansteigt oder die Diode D leitet, und die im wesentlichen gleich einer negativen Diodendurchlassspannung ist wenn die Spannung am Schalttransistor S fällt oder Null ist.

Diese rechteckförmige Spannung wird über den Widerstand $R_{clip}$ den Kathoden der beiden Dioden $D_{clip}$ und $D_{ZVZCS}$ zugeführt, was zur Folge hat, dass der $R_{ZVS1}$-seitige Anschluß des Kondensators $C_{ZVS}$ auf den Wert $V_{supply}$ aufgeladen wird, wenn die Spannung am Punkt D den oberen Wert hat.

Der Spannungsteiler bestehend aus den Widerständen $R_{ZVS1}$ und $R_{ZVS2}$ und der Transistor $T_{ZVS}$ liefern nun eine Maximum-Funktion für den halben Wert der Spannung an $C_{ZVS}$ und für die Spannung am Kondensator $C_T$, so dass der Controller-IC erst dann einen neuen Schaltzyklus beginnen und den Schalter S wieder einschalten kann, wenn beide Spannungen unter den Wert $1/3V_{supply}$ abgefallen sind.

Der Wert von $C_{ZVS}$ wird zusammen mir den Werten für $R_{ZVS1}$ und $R_{ZVS2}$ so gewählt, dass nach dem Wechsel der Spannung an Punkt D vom oberen nach dem unteren Wert noch die Hälfte der Periodendauer verstreicht, die sich aus einer entsprechenden und aus den Resonanzkreiselementen L und $C_{dv/}$ Schwingungs- bzw. Resonanzfrequenz ergibt. Zu diesem Zeitpunkt ist die Spannung $V_T$ entweder auf den Wert Null (für den Fall, dass $U_{in} < U_{out}/2$ ist) oder auf einen Minimalwert abgefallen.

Der Widerstand $R_{restart}$ verhindert nun, dass bei sehr hohen Eingangsspannungen, d.h. wenn der Abfall des Stromes in L sehr lange dauert, das Wiedereinschalten des Schalters S so verzögert wird, dass sich Schaltfrequenzen im Hörbarkeitsbereich ergeben. Außerdem wird dadurch verhindert, dass auch dann, wenn die Detektierung des Wiedereinschaltens einmal versagen sollte, der Konverter seinen Betrieb einstellt und nicht wieder anläuft. Daher ist die Zeitkonstante, dievon $C_{dv/dt}$ und $R_{restart}$ bestimmt wird, so gewählt, dass eine minimale Schaltfrequenz von 20 kHz nicht unterschritten wird.

In der Anlaufphase des Konverters 1 werden über den Widerstand $R_{boot}$ die Kondensatoren $C_{buf1}$ und $C_{buf}$ geladen. Ein Anlaufen des Konverters erfolgt, wenn die Mindestanlaufspannung des Kontroll-IC's 9 von 12 Volt erreicht wird. Dabei unterstützen die Widerstände $R_{tonmax}$ und $R_{tonmin}$ den Anlaufvorgang. Durch das Zusammenwirken dieser Maßnahmen wird eine Anlaufzeit von 13 bis 15 ms erreicht. Danach führt das Kontroll-IC 9 eine weitere weiche Anlauf-Phase durch, die weitere 4 ms in Anspruch nimmt.

Weiterhin wird durch den Konverter mit dem beschriebenen Aufbau eine zusätzliche Leistungsreserve für Netz- bzw. Konvertereingangsspannungen, die unter dem spezifizierten Betriebsbereich liegen, zur Verfügung gestellt. Wenn die Kontrolleinheit 6 im Zustand mit einem Ausschaltsteuersignal am Anschluß Gate verbleibt weil die Wiedereinschaltbedingung (Strom in der Diode D ist Null, Spannung am Kondensator $C_{dv/dt}$ Null oder minimal) noch nicht erfüllt ist aber die Spannung am Kondensator $C_T$ bereits auf $1/3V_{supply}$ + $V_F$ abgefallen ist, wird der Kondensator $C_T$ solange weiter entladen bis der ZVS-Schaltkreis die erneute Erzeugung eines Einschaltsignals am Anschluß Gate bewirkt. Dieser Fall tritt auf, wenn der Konverter bei sehr kleiner Eingangsspannung mit maximalem Strom arbeitet. Damit ist die Spannung am Kondensator $C_T$ beim Start des nächsten Zyklus kleiner als $1/3V_{supply}+V_F$. Demgemäß ist die Zeitspanne $t_{onmax}$ für den nächsten Zyklus länger als im Normalbetrieb. Dies führt zu einer vorübergehenden Frequenzabsenkung und erlaubt es kurzfristig, höhere Ströme in der Spule L aufzubauen, als die Dimensionierung der zeitbestimmenden Elemente eigentlich erlauben würde. Auf diese Weise kann eine beträchtliche Erhöhung der der maximalen Einschaltdauer $t_{onmax}$ bewirkt werden (um etwa 20 bis 30 % bei der vorliegenden Konverterschaltung), was zu der erwähnten zusätzlichen Leistungsreserve für kleine Netzspannungen $U_{net}$ führt.

In Fig. 3 sind die grundsätzlichen zeitlichen Verläufe des Stromes $I_L$ und der am Punkt zwischen dem Schalter S, der Induktivität L und der Diode D abgreifbaren Schalterspannung $V_T$ für den Vollastfall (maximale Konverterausgangsleistung) und einer kleinen Eingangsspannung in einem ersten Eingangsspannungsbereich (z.B. im Bereich um $U_{net}$ = 110 Volt) dargestellt. Zum Zeitpunkt $t_0$ wird der Schalter S eingeschaltet, d.h. in den leitenden Zustand überführt. Der Strom $I_L$ steigt dann bis zum Zeitpunkt $t_1$ linear mir der Steigung $dI_L/dt= U_{in}/L$ bis auf den Wert $I_{L, max}$ an, wobei der Zeitpunkt $t_1$ den Zeitpunkt des Ausschaltens des Schalters S darstellt. Im Zeitraum zwischen $t_0$ und $t_1$ bleibt die Spannnung $V_T$ nahezu auf dem Wert Null.

Zum Zeitpunkt $t_1$ wird der Schalter S ausgeschaltet. Dies führt zu einem steilen Anstieg der Spannung $V_T$ mit der Steigung $I_L(t=t_1)/C_{dv/dt}$, wobei die Steigungsobergrenze von den Bauelementeigenschaften des Schalters S und der Obergrenze für die Erzeugung elektromagnetischer Störungen bestimmt wird. Dabei wird der Wert von $U_{in}$ von der Spannung $V_T$ überschritten. Der von der in der Induktivität L gespeicherten Energie weitergetriebene Strom $I_L$ wird nach dem Zeitpunkt $t_1$ in den Kondensator $C_{dv/dt}$ umgeleitet.

Am Zeitpunkt $t_2$ ist die Spannung am Kondensator $C_{dv/dt}$ soweit angestiegen, dass die Diode D leitend wird. Dies führt zu einem linearen Abfall des Stromes $I_L$ bis zum Zeitpunkt $t_3$, an dem die Diode D in wieder in den sperrenden Zustand übergeht. Zwischen den Zeitpunkten $t_2$ und $t_3$ bleibt die Schalterspannung $V_T$ konstant und entspricht der am Kondensator $C_{outf}$ abfallenden Spannung.

Zum Zeitpunkt $t_3$ setzt eine Schwingung der Spannung $V_T$ um den eingezeichneten Augenblickswert der Spannung $U_{in}$ ein; die diese Schwingung bestimmenden Resonanzkreiselemente sind die Induktivität L und die Kapazität $C_{dv/dt}$. Beim nächsten Nulldurchgang der Spannung $V_T$ wird der Schalter S erneut eingeschaltet und ein neuer Zyklus mit den oben für den Zeitraum zwischen $t_0$ und $t_4$ beschriebenen Vorgängen beginnt. Das Einschalten des Schalters S erfolgt mit einer Schalterspannung $V_T$ gleich Null, d.h. ein ZVS-Betrieb (Zero Voltage Switching) ist sichergestellt. Weiterhin erfolgt das Einschalten des Schalters S bei einem Strom in der Diode D von Null Ampere (ZCS-Betrieb - Zero Current Switching). In der beschriebenen Betriebweise sind deshalb hohe Schaltfrequenzen des Schalters S möglich.

Weiterhin sind in Fig. 3 zwei Zeiträume $t_{onmax}$ und $t_{offmin}$ dargestellt. $t_{onmax}$ gibt den maximalen Zeitraum an, für den innerhalb eines Zyklus der Schalter S eingeschaltet sein darf. $t_{offmin}$ gibt den minimalen Zeitraum an, in dem der Schalter S innerhalb eines Zyklus ausgeschaltet sein muß. Ist vom Beginn eines Zyklus (z. B. $t=t_0$) die Zeitspanne $t_{onmax}+t_{offmin}$ vergangen, ist der frühest zulässige Zeitpunkt erreicht, an dem der Schalter S erneut eingeschaltet und ein neuer Zyklus eingeleitet werden darf. Das Einschalten des Schalters S erfolgt dann, sobald die Spannung $V_T$ den nächsten Nulldurchgang erreicht hat. Der Wert $t_{onmax}$ folgt dem Verlauf der Spannung $U_{in}$ und ist so groß zu wählen, dass bei kleinstem noch zulässigem Wert von $U_{in}$ der Strom $I_L$ noch groß genug ist, um die maximale Konverterausgangsleistung zu bewirken.

Der Konverter wird im Fall gemäß Fig. 3 im kritischen Betrieb betrieben. Die Schaltfrequenz des Schalters S ist im wesentlichen nur abhängig von der Eingangsspannung und dem Wert der Induktivität der Spule L und der Konverterausgangsleistung.

Fig. 4 zeigt die grundsätzlichen zeitlichen Verläufe von $I_L$ und $V_T$ für den Fall einer kleinen Eingangsspannung (wie in Fig. 3) und den Teillastfall, in dem die am Konverterausgang anliegende Last klein ist (hier etwa 10 % der Nennleistung). Im Gegensatz zum in Fig. 3 dargestellten Fall ergibt sich ein lückender Betrieb des Konverters 1. Nach dem Ausschalten des Schalters S im Zeitpunkt $t_1$ und dem nächsten Erreichen eines Nulldurchgangs der Spannung $V_T$ im Zeitpunkt $t_4$ ist seit dem Zyklusbeginn ($t=t_0$) noch nicht so viel Zeit vergangen, wie die Summe $t_{onmax}+ t_{offmin}$ angibt. Erst wenn ein solcher Zeitraum verstrichen ist, soll ja ein Wiedereinschalten des Schalters S erfolgen. Da dementsprechend im Zeitpunkt $t_4$ noch kein Ausschalten des Schalters S erfolgt, setzt sich die im Zeitpunkt $t_2$ begonnene Schwingung von $V_T$ (wirksame Schwingkreiselemente: L und $C_{dv/dt}$) fort. $V_T$ kann allerdings hier nicht negativ werden, denn der Schalter S ist als MOSFET-Transistor ausgeführt, der ja eine interne Body-Diode (nicht dargestellt) aufweist, die einen Abfall der Spannung $V_T$ auf negative Werte verhindert, so dass zwischen den Zeitpunktent $t_4$ und $t_5$ die Spannung $V_T$ auf den Wert Null begrenzt wird. Im Zeitpunkt $t_5$ beginnt der seit dem Zeitpunkt $t_3$ schwingende Strom $I_L$, der im Bereich zwischen $t_3$ und $t_5$ eine negative Halbwelle ausgeführt hat, eine positive Halbwelle ausführen.

Zum Zeitpunkt $t_5$ beginnt eine positive Halbwelle der Spannung $V_T$, die im Zeitpunkt $t_6$ (an dem der Strom $I_L$ gerade eine negative Halbwelle ausführt) endet, wonach wiederum ein Zeitraum mit $V_T$=0 einsetzt. Zum Zeitpunkt $t_6$ ist nun seit dem Zyklusbeginn (Zeitpunkt $t_0$) mehr Zeit, als die Summe $t_{onmax}+ t_{offmin}$ angibt, vergangen, so dass die Bedingung für ein Wiedereinschalten des Schalters S erfüllt ist. Das Wiedereinschalten erfolgt nun, wie oben beschrieben, eine halbe Periodendauer nachdem der Strom in D zu Null geworden ist, also etwa in der Mitte zwischen $t_6$ und $t_7$. In den Verläu-fen wirkt sich dieses aber erst dann sichtbar aus, wenn der Strom in der Spule L wieder positiv geworden ist, also zum Zeitpunkt $t_7$. So läßt sich auf ideale Weise ein ZVS- und ZCS-Betrieb realisieren. Die auftretenden Verluste im Schalter S und in der Diode D werden auf ein Minimum reduziert. Die sich ergebende Schaltfrequenz ist in dem Anwendungsfall gemäß Fig. 4 abhän-gig von $t_{onmax}$ und $t_{offmin}$.

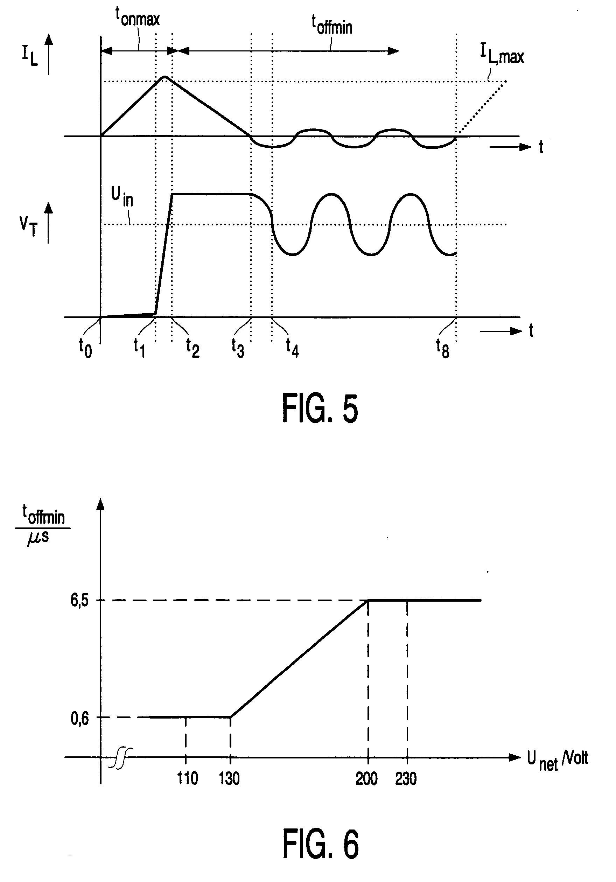

Fig. 5 zeigt die grundsätzlichen Zeitverläufe von $I_L$ und $V_T$ für den Fall hoher Eingangsspannungen in einem zweiten Eingangsspannungsbereich (z. B. im Bereich von $U_{net}$ = 230 V) für alle Lastfälle (Vollast und Teillast).

Wie in den Fällen gemäß Fig. 3 und 4 setzen ab einem Zeitpunkt $t_3$ Schwingungen des Stromes $I_L$ und der Spannung $V_T$ ein. Die Spannung $V_T$ schwingt wiederum um die Spannung $U_{in}$, die aufgrund der höhe-ren Konvertereingangsspannung $U_{net}$ einen entspre-chend größeren Wert annimmt, so dass $V_T$ nicht mehr bis auf den Wert Null absinkt. Um die Schaltverluste minimal zu halten, wird das Ende eines Schaltzyklus $t_8$ und damit das Wiedereinschalten des Schalters S in das nächste folgende Minimum der Spannung $V_T$ nach der ab dem Zyklusbeginn $t_0$ verstrichenen Zeit $t_{onmax}+ t_{offmin}$ gelegt.

Entgegen üblichen Konvertern mit Hochsetzstellerstruktur, bei denen bei einer reduzierten Konvertereingangsspannung der kritische Betrieb aufrechterhalten wird (was zu höheren Schaltfrequenzen und einem reduzierten und weit unterhalb des Sättigungsstromes $I_{L,sat}$ liegenden Maximalwert des Stromes $I_L$ führt), wird es beim erfindungsgemäßen Konverter zugelassen, dass der Strom $I_L$ während der Einschaltphasen des Schalters S bis zum die Obergrenze für den Strom $I_L$ darstellenden Sättigungsstrom $I_{L,sat}$ ansteigt. Der Konverter arbeitet bei diesem Ansatz im lückenden Betrieb, so dass eine Schaltfrequenzreduktion bewirkt wird.

Der erfindungsgemäße Konverter bewirkt eine sogenannte Leistungsfaktorkorrektur. Das gewählte Steuerungsprinzip, den Schalter S bei Erreichen eines Stromes auszuschalten , der durch den in der Kontrolleinheit enthaltenen Regler bestimmt wird, führt - allein betrachtet - zu einem rechteckförmigen Verlauf des Eingangsstromes $I_{net}$. Dies macht es schon möglich, Leistungen bis zu einigen hundert Watt ohne Überschreitung der erlaubten Grenzen für den Oberschwingunsgehalt des Netzstromes zu realisieren.

In dem beschriebenen Konverter bewirkt darüberhinaus die Festlegung einer minimalen Schaltfrequenz zusammen mit dem gewählten Steuerungsprinzip, dass der Verlauf des Netzeingangsstromes $I_{net}$ nicht mehr rechteckförmig, sondern trapezähnlich mit abgerundeten Übergangen ist. Dadurch wird der Ober-schwingungsanteil des Eingangsstromes $I_{net}$ weiter ver-ringert und es können weit höhere Leistungen in Übereinstimmung mit den entsprechenden Netzstromvorschriften erzielt werden.

**Patentansprüche**

1. Konverter mit einer Hochsetzstelleranordnung (5), dadurch gekennzeichnet,

   dass bei einer in einem ersten Spannungsbe-reich liegenden Konvertereingangsspannung ($U_{net}$) ein erster Hochsetzstellerschaltfre-quenzbereich vorgesehen ist und
   dass bei einer in einem zweiten Spannungsbe-reich liegenden Konvertereingangsspannung ($U_{net}$) ein zweiter Hochsetzstellerschaltfre-quenzbereich vorgesehen ist, wobei der erste Spannungsbereich kleinere Spannungswerte umfaßt als der zweite Spannungsbereich und wobei der erste Hochsetzstellerschaltfrequenzbereich größere Frequenzwerte umfaßt als der zweite Hochsetzstellerschaltfrequenzbereich.

2. Konverter nach Anspruch 1, dadurch gekennzeichnet,

   dass im zweiten Spannungsbereich ein lückender Konverterbetrieb vorgesehen ist und
   dass näherungsweise die gleiche Obergrenze ($I_{L, sat}$) für den Strom ($I_L$) durch die Hochsetzstellerinduktivität (L) sowohl beim Betrieb im ersten als auch beim Betrieb im zweiten Spannungsbereich vorgesehen ist.

3. Konverter nach Anspruch 1 oder 2, dadurch gekennzeichnet,

   dass im ersten Spannungsbereich und unter Vollast ein Betrieb des Konverters im Grenzbereich zwischen lückendem und nichtlückendern Betrieb vorgesehen ist,
   dass im ersten Spannungsbereich und unter Teillast ein lückender Betrieb des Konverters vorgesehen ist und
   dass im zweiten Spannungsbereich sowohl Unter Vollast als auch unter Teillast ein lückender Betrieb des Konverters vorgesehen ist.

4. Konverter nach einem der Ansprüche 1 bis 3, dadurch gekennzeichnet,

dass ein erster Kondensator ($C_{buf}$) zur Lieferung der Versorgungsspannung $V_{supply}$ eines integrierten Schaltkreises (9), der zur Lieferung des Steuersignals für das Hochsetzstellerschaltelement (S) dient, und

dass der erste Kondensator ($C_{buf}$) mit dem Punkt zwischen Hochsetzstellerinduktivität (L), Hochsetzstellerschaltelement (S) und Hochsetzstellerdiode (D) über einen zweiten Kondensator ($C_{dv/dt}$) und eine weitere Diode, über die der erste Kondensator ($C_{buf}$) nach Art einer Ladungspumpe aufgeladen wird, gekoppelt ist.

5. Konverter nach einem der Ansprüche 1 bis 4,
   <u>dadurch gekennzeichnet,</u>

   dass ein mit dem Punkt zwischen der Hochsetzstellerinduktivität (L), dem Hochsetzstellerschaltelement (S) und der Hochsetzstellerdiode (D) verbundener Schaltungsblock ein Signal für die Erkennung des Nullzustandes des Stroms durch die Hochsetzstellerdiode (D) und/oder des Zustandes der minimalen Spannung am Schalter S liefert.

6. Konverter nach Anspruch 1,
   <u>dadurch gekennzeichnet,</u>

   dass der Übergang vom ersten in den zweiten Betriebsbereich kontinuierlich erfolgt.

FIG. 1

EP 1 083 648 A2

FIG. 2

FIG. 3

FIG. 4

FIG. 5

FIG. 6